(19) Europäisches Patentamt
European Patent Office
Office européen des brevets

(11) **EP 4 235 588 A1**

## (12) EUROPEAN PATENT APPLICATION

(43) Date of publication:
**30.08.2023 Bulletin 2023/35**

(21) Application number: **22158531.8**

(22) Date of filing: **24.02.2022**

(51) International Patent Classification (IPC):
**G06T 15/08** $^{(2011.01)}$    **G06T 15/20** $^{(2011.01)}$

(52) Cooperative Patent Classification (CPC):
**G06T 15/08; G06T 15/205**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA
Toyota-shi, Aichi-ken, 471-8571 (JP)**
• **ETH Zurich - The Swiss Federal Institute of
Technology Zurich
8092 Zurich (CH)**

(72) Inventors:
• **ABBELOOS, Wim
1140 BRUSSELS (BE)**
• **CAI, Shengqu
8092 ZURICH (CH)**
• **OBUKHOV, Anton
8092 ZURICH (CH)**
• **DAI, Dengxin
8092 ZURICH (CH)**
• **VAN GOOL, Luc
8092 ZURICH (CH)**

(74) Representative: **Cabinet Beau de Loménie
158, rue de l'Université
75340 Paris Cedex 07 (FR)**

(54) **NOVEL VIEW GENERATION METHOD, TRAINING METHOD, COMPUTER PROGRAM, READABLE MEDIUM AND SYSTEM**

(57)    A computer-implemented novel view generation method for generating a novel view ($I_{gen}$) of an object (C) as seen from a novel pose (d), based on an initial view ($I_{real}$) of the object, comprising:
S20) calculating a latent feature (z) characterizing the object (C), based on the initial view ($I_{real}$); and
S40) calculating the novel view ($I_{gen}$) of the object using a neural radiance field (NeRF), based on the novel pose (d) and the latent feature (z), the novel view ($I_{gen}$) representing the object (C) as seen from the novel pose (d).

Training method for training an encoder (E) to calculate a latent feature (z) based on an initial view ($I_{real}$) of an object (C), and for training a generator (G) to output a novel view ($I_{gen}$) of the object (C) seen from a novel pose (d), based on the latent feature (z) and the novel pose (d).

**FIG.1C**

**Description**

FIELD OF THE DISCLOSURE

The present disclosure is related to methods and systems for generating novel views of an object, based on an initial view of the object.

BACKGROUND OF THE DISCLOSURE

Due to widespread use of television sets, computers, smartphones, etc., the demand for visual content such as images or videos is rapidly increasing.

With digitization and computers, a growing part of such visual content can now be created by calculation.

For instance, many methods are now available to generate visual content representing an object, simply based on a digital mockup of the object. However, in many cases the digital mockup of the object is not available, or is too costly to obtain. When no such mockup is available, the only solution to create visual content showing the object is direct creation of the visual content with a camera.

However, shooting photos or videos with cameras is constraining. It imposes to have at one's disposal the object that is to be shown, to arrange the place where the visual content will be produced, in particular controlling the lighting.

During such photo- or video- shootings, the constraint to acquire all content during the shooting, in a comprehensive manner (because in many cases, no further such shootings will be possible) is particularly demanding.

The methods and systems according to the present disclosure have been conceived in order to address the above concern.

More precisely, these methods and systems have been conceived to make it possible, on the basis of a single image of an object, to have the possibility to generate novel views of the object, showing the object for other points of view in a realistic manner. A plurality of such novel views can then be combined to produce a video.

Before presenting some systems which have been developed to generate novel views of objects based on one or more initial images thereof, some definitions and notations used in the present document will now be presented:

Novel View Generation, or NVG, is the task consisting, given sparse sample views of an object, called initial views, in synthesizing or generating one or more novel views of the object, from unseen camera poses.

A camera pose is a collection of variables including a direction along which an image has been acquired or calculated relative to a scene (for instance, relative to an object which is being photographed), and, often, a distance between the camera and the scene. A camera pose may for instance be defined by two viewing angles $(\Theta,\Phi)$ when the viewing direction is known to pass through a known point, for instance when the viewing direction passes through the origin point of coordinates (0,0,0). When the pose does not include distance information, it usually means that a fixed distance is assumed.

A Radiance Field is a continuous mapping from a 3D location (x,y,z) and a 2D viewing direction $(\Theta,\Phi)$ to an RGB color value. A radiance field accordingly is an implicit description of a static continuous scene or object. The viewing direction may be encoded as a couple of angles $(\Theta,\Phi)$ a 3D cartesian unit vector, or any equivalent variable.

A Neural Radiance Field, or NeRF, is a Radiance Field implemented by a neural network, configured accordingly to output an emitted color and a volume density (noted herein c and $\sigma$) for each location (x,y,z) in the scene and pose d relative to the scene. Accordingly, a NeRF may for instance encode an object as a function or model f, wherein:

$$f(x,y,z,d) = (r,g,b,\sigma)$$

In this expression, the pose d may be for instance be defined by two angles $(\Theta,\Phi)$ or by two angles and a distance $(\Theta,\Phi,D)$.

In addition, in a NeRF an object may for instance be encoded as weights of a plurality of multi-layer perceptrons (MLPs). A Neural Radiance Field for instance may be a model as proposed by [NeRF].

A noun between square brackets (e.g. [NeRF]) refers to one of the publications listed below in the 'References' section.

A generated view is a synthetic image calculated by a generator of a novel view generation system according to the present disclosure. A generated view must be distinguished from a real view. Indeed in the present document, by contrast a real view is a view (also called initial view), used to train a novel view generation system according to the present disclosure, or as an input to that novel view generation system. Usually, a real view is an image acquired by a physical camera; however it may also be a synthetic image, for instance a synthetic image rendered from a 3D-model.

An object defines broadly any type of physical object(s), or a set of such objects, in the real world or in virtual reality, for instance in the metaverse, living or dead, animate or inanimate. An object can therefore be manufactured object(s), but also animal(s), human being(s), part(s) of human beings (e.g hands, faces), etc.

If 'X' denotes a model, the notation X* is used to indicate that the model X is frozen; that is, its weights are considered constant.

In the present document, the words 'view' and 'image' are used interchangeably.

Various systems have been developed to generate novel views of an object, based on one or more initial images representing the object.

In many of these systems, an explicit 3D-description of the object is reconstructed, for instance based on voxels or the like. However, it has appeared that such solutions are difficult to implement, may require a very high accuracy or resolution while acquiring the initial images, and in many cases are not sufficient to produce satisfactory novel views of the object. In particular, many systems do not produce satisfactory representations of specular surfaces of objects.

As an alternative, neural radiance fields have been developed (See [NeRF]). Advantageously, the novel views generated using NeRFs are often visually very realistic. However, the methods developed to generate such NeRFs require multiple images of an object. These images are used to train the NeRF; after training, the NeRF can be used to generate novel views of the object. These methods are therefore somewhat difficult and/or long to implement.

Therefore, there is a need for methods or systems which would make it possible, on the basis of a single image of an object, to generate realistic novel views of the object.

References:

[NERF] Ben Mildenhall, Pratul P. Srinivasan, Matthew Tancik, Jonathan T. Barron, Ravi Ramamoorthi, and Ren Ng. Nerf: Representing scenes as neural radiance fields for view synthesis. In ECCV, 2020.

[PIGAN] Eric Chan, Marco Monteiro, Petr Kellnhofer, Jiajun Wu, and Gordon Wetzstein. Pi-gan: Periodic implicit generative adversarial networks for 3d-aware image synthesis. In arXiv, 2020.

[SSIM] Zhou Wang, A.C. Bovik, H.R. Sheikh, and E.P. Simoncelli. Image quality assessment: from error visibility to structural similarity. IEEE Transactions on Image Processing, 13(4):600-612, 2004.

[SIREN] Vincent Sitzmann, Julien N.P. Martel, Alexander W. Bergman, David B. Lindell, and Gordon Wetzstein. Implicit neural representations with periodic activation functions. In Proc. NeurIPS, 2020.

[GAN] Ian Goodfellow, Jean Pouget-Abadie, Mehdi Mirza, Bing Xu, David Warde-Farley, Sherjil Ozair, Aaron Courville, and Y.Bengio. Generative adversarial networks. Advances in Neural Information Processing Systems, 3, 06 2014.

[VGG] Shangzhe Wu, Christian Rupprecht, and Andrea Vedaldi. Unsupervised learning of probably symmetric deformable 3d objects from images in the wild. In CVPR, 2020.

[FILM] Ethan Perez, Florian Strub, Harm de Vries, Vincent Dumoulin, and Aaron C. Courville. Film: Visual reasoning with a general conditioning layer. CoRR, abs/1709.07871, 2017.

[GANmethods] Dong, H. W., & Yang, Y. H. (2019). Towards a deeper understanding of adversarial losses. arXiv preprint arXiv:1901.08753.

[CelebA] Ziwei Liu, Ping Luo, Xiaogang Wang, and Xiaoou Tang. Deep learning face attributes in the wild. In Proceedings of International Conference on Computer Vision (ICCV), December 2015.

[CARLA] Alexey Dosovitskiy, German Ros, Felipe Codevilla, Antonio Lopez, and Vladlen Koltun. CARLA: An open urban driving simulator. In Proceedings of the 1st Annual Conference on Robot Learning, pages 1-16, 2017.

[IS] Tim Salimans, Ian J. Goodfellow, Wojciech Zaremba, Vicki Cheung, Alec Radford, and Xi Chen. Improved techniques for training gans. CoRR, abs/1606.03498, 2016.

[FID] Martin Heusel, Hubert Ramsauer, Thomas Unterthiner, Bernhard Nessler, G¨unter Klambauer, and Sepp Hochreiter. GANs trained by a two time-scale update rule converge to a nash equilibrium. CoRR, abs/1706.08500, 2017.

[KID] Mikofaj Bi'nkowski, Danica J. Sutherland, Michael Arbel, and Arthur Gretton. Demystifying mmd GANs, 2021.

[PixelNeRF] Alex Yu, Vickie Ye, Matthew Tancik, and Angjoo Kanazawa. pixelNeRF: Neural radiance fields from one or few images. In CVPR, 2021.

[CodeNeRF] Wonbong Jang and Lourdes Agapito. Codenerf: Disentangled neural radiance fields for object categories, 2021.

[Shapenet-SRN] Angel X. Chang, Thomas A. Funkhouser, Leonidas J. Guibas, Pat Hanrahan, Qi-Xing Huang, Zimo Li, Silvio Savarese, Manolis Savva, Shuran Song, Hao Su, Jianxiong Xiao, Li Yi, and Fisher Yu. Shapenet: An information-rich 3d model repository. CoRR, abs/1512.03012, 2015.

[GRF] Alex Trevithick and Bo Yang. Grf: Learning a general radiance field for 3d scene representation and rendering. In arXiv:2010.04595, 2020.

[HoloGAN] Thu Nguyen-Phuoc, Chuan Li, Lucas Theis, Christian Richardt, and Yong-Liang Yang. Hologan: Unsupervised learning of 3d representations from natural images. In The IEEE International Conference on Computer Vision (ICCV), Nov 2019.

[GRAF] Katja Schwarz, Yiyi Liao, Michael Niemeyer, and Andreas Geiger. Graf: Generative radiance fields for 3d-aware image synthesis. In Advances in Neural Information Processing Systems (NeurIPS), 2020.

[pix2style2pix] Richardson, E., Alaluf, Y., Patashnik, O., Nitzan, Y., Azar, Y., Shapiro, S., & Cohen-Or, D. (2021). Encoding in style: a stylegan encoder for image-to-image translation. In Proceedings of the IEEE/CVF Conference on Computer Vision and Pattern Recognition (pp. 2287-2296).

## SUMMARY OF THE DISCLOSURE

The methods and systems presented hereafter have been developed in order to achieve the above-mentioned objective.

Advantageously, the proposed systems can perform novel view synthesis or generation on the basis of a single image, without the need of pretraining the system based on multiple images of the considered object, and with no need to train the system based on annotated images: The proposed systems can be trained based on real images, without explicit 3D supervision, in an end-to-end fashion.

A first aspect of the present disclosure is a computer-implemented novel view generation method for generating a novel view of an object as seen from a novel pose, based on an initial view of the object.

The method comprises:

S20) calculating a latent feature characterizing the object, based on the initial view; and
S40) calculating the novel view of the object using a neural radiance field, based on the novel pose and the latent feature, the novel view representing the object as seen from the novel pose.

In some embodiments, step S40 comprises:

S42) based on the novel pose, calculating positions at which rays used to calculate the novel view with the neural radiance field pass through;
S44) based on the latent feature, the calculated positions and the novel pose, calculating with the neural radiance field a color and a density at each of said positions; and
S46) based on the color and a density at each of said positions, calculating the novel view.

In some embodiments, step S20 is performed with an encoder which is a neural network, step S40 is performed with a generator comprising the neural radiance field, the encoder and the generator being trained so that the novel view calculated at step S40 represents the object as seen from the novel pose.

The proposed novel view generation method may be implemented in particular using an encoder and a generator trained with one of the training methods presented below.

Indeed, a second aspect of the present disclosure is a computer-implemented training method for training an encoder to calculate a latent feature based on an initial view of an object, and for training a generator to output a realistic novel view of the object as seen from a novel pose, based on the latent feature output by the encoder and the novel pose, wherein the training method comprises iteratively performing the following training operations:

S100,S300) training a discriminator and the generator as a generative adversarial network, the discriminator being a neural network and being trained to calculate a realism score representative of a probability of a view inputted by the discriminator to be a real view rather than a generated view; and
S400) training the generator and the encoder, based on an initial view, to generate a reconstructed novel view resembling the inputted initial view.

In the above definition, the discriminator has been defined as being configured to calculate a realism score representative of a probability of a novel view outputted by the generator to be a real view rather than a generated view. In this definition, the realism score may be any value from which the probability of the novel view to be a real view rather than a generated view can be determined. For instance, the realism score can be the probability of the novel view to be a generated view rather than a real view.

In some embodiments, the encoder is configured to calculate a pose of the initial view inputted to the encoder; and at step S400, the encoder and the generator are jointly trained so that, when the initial view is inputted to the encoder, the encoder calculates the latent feature and the pose of the initial view; and when the calculated latent feature and the pose of the initial view are inputted to the generator, the generator calculates the novel view which resembles the inputted initial view.

The training method defined above is usually performed iteratively, in successive iterations.

In the training method, the step for training the generator and the discriminator (steps S100 and S300), and the step for training the generator and the encoder (step S400) may be performed sequentially, or may be performed jointly, as in the exemplary embodiment described below.

In the training method, steps S100 and S300 for training the generator and the discriminator as a generative adversarial network are steps in which the generator and the discriminator are trained so that the discriminator is incentivized to correctly distinguish a generated view from a real view, the generated view in this case being a novel view generated by the generator, and the real view being an image of a training dataset; and so that the generator be incentivized so as to 'fool' the discriminator, that is, so as to produce novel views considered real views by the discriminator.

Training the discriminator and the generator in such a manner has been described in particular by [GAN]. Additional methods for training GANs are disclosed by [GANmethods].

Step S400 for training the generator and the encoder may be performed as follows.

During an iteration of the training method, at step S400, a batch of initial real views is inputted to the encoder. On this basis, the encoder calculates predicted values of the latent feature and of the pose, which correspond to the various inputted initial views. Then, the generator calculates reconstructed images based on the predicted values of the latent feature and poses. Loss values are then calculated for the respective inputted initial views and the corresponding outputted reconstructed views. Finally, the weights of the encoder and of the generator are updated by backpropagation.

The reconstruction loss function used at step S400 is chosen so that the encoder and the generator tend to output reconstructed novel views which are as identical as possible as the initial views based on which they have been calculated.

In this purpose, in some embodiments, during training operation S400, the generator and the encoder are trained using a reconstruction loss function which includes one or more of the following terms:

- a mean squared error term, which is a value representative of the per-pixel squared differences between the initial view and the reconstructed view;
- a structural similarity term which is a value representative of a structural similarity index calculated between the initial view and the reconstructed view; and
- a perceptual loss term, which is a value representative of differences between features extracted respectively from the initial view and the reconstructed view.

The structural similarity term may for instance be the Structural Similarity Index Measure term $L_{SSIM}$ defined by [SSIM].

The perceptual loss term, may for instance be the perceptual loss term defined by [VGG].

The perceptual loss term may be calculated for instance as a mean squared differences between said extracted features.

The extracted features are usually features characterizing the view, extracted using a pre-trained image recognition system, for instance as the output of the penultimate layer of a neural network image classifier.

In some embodiments, the training operations S100,S300 comprise iteratively performing a training operation S100 comprising:

S110) inputting a batch of samples of the latent feature and the pose, and a batch of real views from the dataset;
S120) passing said batch of samples of the latent feature and the pose through the frozen generator to obtain a batch of generated novel views;
S130) passing said batch of generated novel views through the discriminator to obtain a batch of predicted realism scores for the generated novel views; and passing said batch of real views through the discriminator to obtain a batch of predicted realism scores for the real views;
S140) calculating values of a GAN discriminator loss function for each sample of the batch (these values are loss values outputted by the GAN discriminator loss function), the GAN discriminator loss function being configured, for the samples of the batch, to maximize the realism scores calculated by the discriminator for the real views, and to minimize the realism scores calculated by the discriminator for the generated novel views;
S150) optimizing values of weights of the discriminator, based on the calculated values of the GAN discriminator loss function.

The GAN discriminator loss function is therefore preferably configured to incentivize the discriminator to predict that the initial views are real images and to predict that the generated novel views are generated images.

Optionally, in some embodiments of the training method, the discriminator is configured to additionally output a pose of an initial view inputted to the discriminator.

Thanks to this feature, the GAN discriminator may be trained to correctly predict the pose of the view it receives as an input. Thanks to this function, the generator may be trained to more efficiently disentangle the pose from the latent feature.

In some of these latter embodiments, in order to train the GAN to correctly predict the pose of the inputted views, when the training operations comprise the above-described training operation 100, at step S130 when said batch of generated novel views is passed through the discriminator, the discriminator additionally outputs a batch of predicted poses, and when said batch of initial views is passed through the discriminator, the discriminator additionally outputs a batch of predicted poses; and the GAN discriminator loss function used during training operation S100 is configured, for the samples of the batch, to additionally minimize differences between the poses of the samples and the predicted poses obtained for the corresponding generated novel views.

In some embodiments, the training operations S100,S300 comprise iteratively performing a training operation S300 comprising:

S310) inputting a batch of samples of the latent feature and the pose;
S320) passing said batch of samples of the latent feature and the pose through generator G to obtain a batch of generated novel views;
S330) passing said batch of generated novel views through the frozen discriminator to obtain a batch of predicted realism scores for the generated novel views;
S340) calculating values of a GAN generator loss function for each sample of the batch (these values are loss values outputted by the GAN generator loss function). The GAN generator loss function is configured, for the samples of the batch, to maximize the realism score calculated by the discriminator for the generated novel views; and
S350) optimizing values of weights of the generator, based on the calculated values of the GAN generator loss function.

The GAN generator loss function is therefore preferably configured to incentivize the generator to generate novel views which resemble to the real images (and thus obtain a high realism score).

In some of these latter embodiments, and when the discriminator is configured to additionally output a pose of an initial view inputted to the discriminator, at step S330 when said batch of generated novel views is passed through the frozen discriminator, the frozen discriminator additionally outputs a batch of predicted poses for the generated novel views; and the GAN generator loss function used during training operation S300 is configured, for the samples of the batch, to additionally minimize differences between the poses of the samples and the predicted poses obtained for the corresponding generated novel views.

In these embodiments, the GAN generator loss function accordingly is configured to incentivize the generator to generate novel views which enable the discriminator to predict poses of generated novel views equal to the poses of the corresponding initial views.

In addition to training operations S100, S300 and S400, additional training operations can be performed to increase the performance of novel view generation.

For instance, in some embodiments the training method comprises iteratively performing a training operation S200 comprising:

S210) inputting a batch of samples of the latent feature and the pose;
S220) passing said batch of samples of the latent feature and the pose through the frozen generator to obtain a batch of generated novel views;
S230) passing said batch of generated novel views through the encoder to generate a batch of predicted latent features and poses;
S240) calculating values of a GAN inversion loss function for each sample, wherein the GAN inversion loss function is configured to minimize differences, for each sample of the batch, between the pose of the sample and the predicted pose obtained for the corresponding generated novel view, and between a latent value of the sample and a corresponding predicted latent value obtained (at step 230) for the corresponding generated novel view;
S250) optimizing values of weights of the encoder, based on the calculated values of the GAN inversion loss function.

Preferably, the distribution of the poses in the batch of samples inputted at step S210 is similar to the distribution of the poses of the initial views in the training dataset.

In the embodiments presented above, the corresponding generated novel view which corresponds to a sample is the novel view obtained at step S220 based on the sample.

In some embodiments, the training method comprises iteratively performing a conditional adversarial training operation S500 comprising:

S420) passing a batch of real views of objects through the encoder to obtain a batch of predicted values for the latent feature;

S510) pairing each predicted value of the batch of predicted values of the latent feature with a random value of the pose to obtain a batch of paired values of the latent feature and the pose;

S520) passing said batch of paired values of the latent feature and the pose through the generator to obtain a batch of generated novel views;

S530) passing said batch of generated novel views through the frozen discriminator to obtain a batch of predicted realism scores;

S540) calculating values of a conditional adversarial loss function for each generated novel view of the batch, wherein the conditional adversarial loss function is configured to maximize the realism scores attributed to the generated novel views;

S550) optimizing values of weights of the generator and the encoder, based on the calculated values of the conditional adversarial loss function.

Indeed, maximizing the realism scores for the generated novel views (obtained from a variety of pose samples), as defined by the above-defined conditional adversarial loss function, leads to maximize the realism as measured by the discriminator.

In some embodiments of the training method, when training is started, during a first number of iterations, the encoder is frozen during training operation S400, or during training operations S400 and S500.

In some embodiments of the training method, the training data inputted to the encoder or the generator to train the encoder and the generator only include views of objects, for instance only include views of objects of a specific class of objects. In these cases accordingly, the training method is executed without using annotated views, and in particular without any prior knowledge of the pose of the objects in the different images of the training dataset.

In some embodiments of the training method, the training data inputted to the encoder or the generator to train the encoder and the generator only include a single view per object.

Importantly, the encoder and generator obtained according to the present disclosure may be used not only to generate novel views, but to produce other types of data.

Indeed, the primary result of the present disclosure is the encoder and the generator, which is configured to generate views. In this purpose, the generator includes a NeRF; the output of the NeRF is passed through a renderer to generate the generated view.

However, the output of the NeRF can be used to other purposes than generating views.

Therefore, the present disclosure more broadly also includes a method to configure a NeRF, specifically, the NeRF of the generator. Accordingly, the present disclosure also includes a method to produce an emitted color c and a volume density $\sigma$, for a specific location and desired pose relative to the object, based on an initial view of the object.

Using an encoder and the NeRF of a generator obtained with the above-defined training method, this method comprises the following steps:

- passing the initial view through the encoder, so as to obtain a corresponding latent view;
- passing that latent feature, the location and the desired pose to the NeRF of the generator, so as to obtain, as an output of the NeRF of the generator, the emitted color c and the volume density $\sigma$ for the location and the pose relative to the object.

That capacity of the NeRF to output such predicted colors and densities can be used to produce novel views, but also many other types of data.

In particular, that capacity of the NeRF can be used to produce a 3D-model of the object. The 'Marching cubes' algorithm may be used for instance in this purpose.

In particular implementations, the proposed method is determined by computer program instructions.

Accordingly, another purpose the present disclosure is to propose one or more computer program(s) comprising instructions which, when the instructions are executed by one or more processor(s), cause the computer to carry out the steps of a novel view generation method as presented above, or the steps of a training method as presented above, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more computer program(s) as defined above stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a system comprising one or more processor(s) and a non-transitory computer readable medium as presented above.

This system may for instance be a novel view generation system, configured to generate novel views of an object, based on a single image thereof.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1A is a schematic view in perspective showing a novel view generation system in accordance with the present disclosure, being used to acquire an image of an object (a car);

Fig. 1B is a schematic view showing the structure of the novel view generation system of Fig.1A;

Fig. 1C is a schematic view showing an exemplary generation of novel views by the novel view generation system of Fig.1A;

Fig. 1D is a schematic block diagram showing the process for generating a novel view illustrated by Fig.1C;

Figs. 2A-2D are a schematic views representing different training operations performed to train the novel view generation system represented on Fig.1;

Fig.3 is a block diagram showing the steps of a novel view generation method in accordance with the present disclosure;

Fig.4 is a block diagram showing the steps of a training method to train a novel view generation system in accordance with the present disclosure;

Fig.5 is a block diagram showing the steps of a GAN discriminator training operation and of a GAN inversion training operation, performed during the method illustrated by Fig.4;

Fig.6 is a block diagram showing the steps of a GAN generator training operation, performed during the method illustrated by Fig.4; and

Fig.7 is a block diagram showing the steps of a GAN reconstruction training operation and of a conditional adversarial training operation, performed during the method illustrated by Fig.4.

DESCRIPTION OF THE EMBODIMENTS

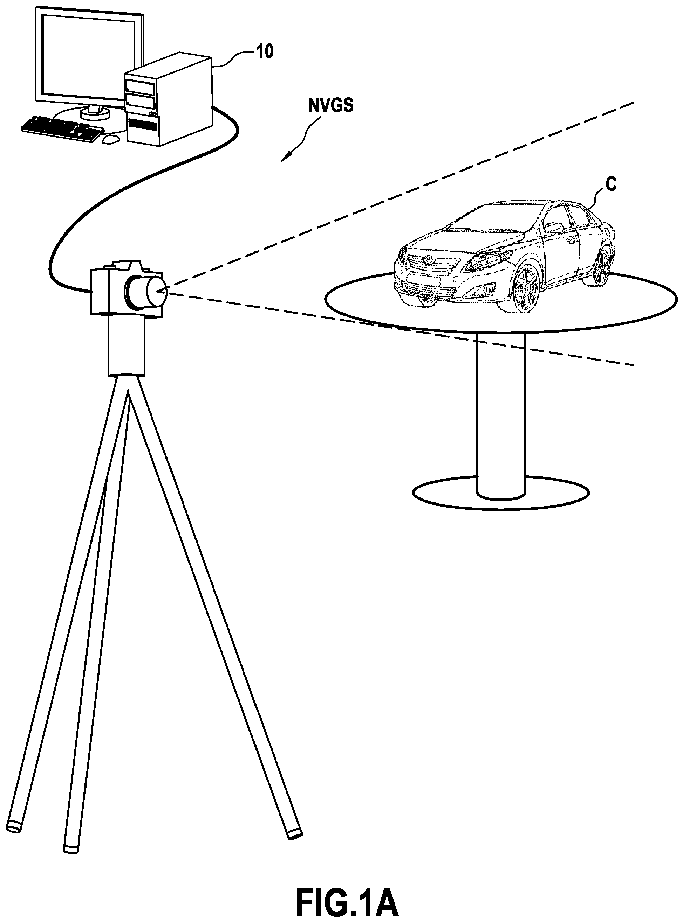

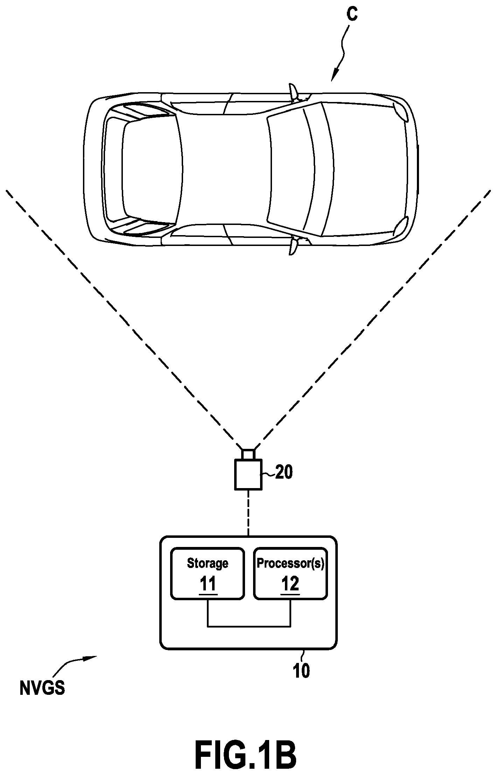

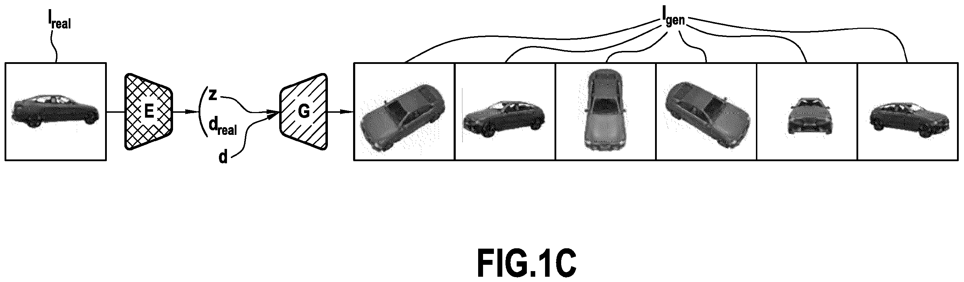

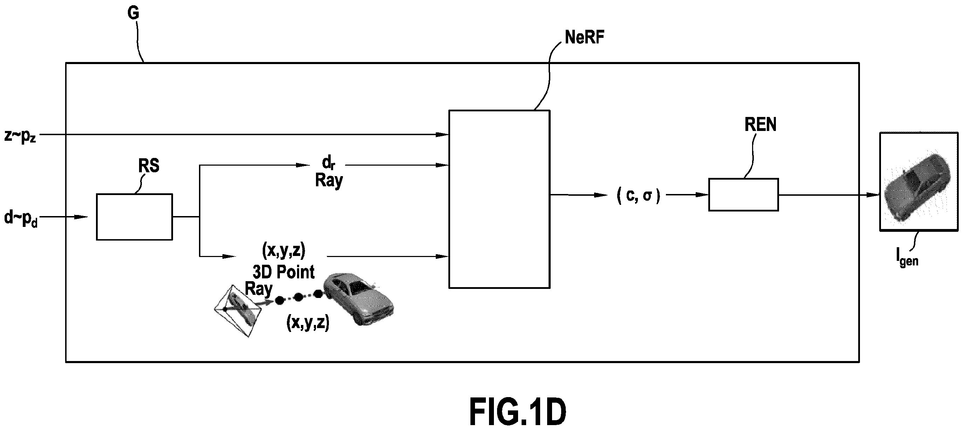

Methods and systems configured to generate novel views of an object based on an initial image of the object and which constitute exemplary embodiments of the present disclosure are now going to be presented in relation with Figs.1-7. Wherever possible, the same reference signs will be used throughout the figures to refer to the same or like parts or components.

In Figs.1A and 1B, a novel view generation system NVGS is shown. The NVGS system is shown during the acquisition of an image, or view, of a small scale mockup C of a car.

The NVGS system comprises a computer 10 and a camera 20 connected to computer 10.

The functions of the novel view generation system NVGS are implemented on computer 10. Computer 10 comprises a non-transitory storage medium 11 and one or more processor(s) 12 (Fig.1B). The one or more processors 12 are intended to be representative of the presence of any one or more processors or processing devices, of any of a variety of forms. In addition, although computer 10 is represented on Figs.1A-1B in a single housing, it may be a distributed calculation system, comprising a plurality of processors, possibly physically arranged on different locations. For instance, part of processors 12 may be part of a remote server.

Camera 10 can be any type of digital camera, capable of acquiring views of an object. The images acquired by camera 20 are transmitted to computer 10.

A computer program $P_{NVG}$ comprising instructions which, when they are executed by the processor(s) 12, cause these processor(s) to carry out the steps of a novel view generation method used to generate novel views by implementing the novel view generation methods disclosed herein, is stored in storage medium 11.

A computer program $P_{TNVG}$ comprising instructions which, when they are executed by the processor(s) 12, cause these processor(s) to carry out the steps of a training method for training an encoder and a generator by implementing the training methods disclosed herein, is also stored in storage medium 11.

The programs $P_{NVG}$ and $P_{TNVG}$ and the storage media 11 are examples respectively of computer programs and a computer-readable recording medium according to the present disclosure.

The memory 11 of computer 10 constitutes a non-volatile recording medium according to the present disclosure, readable by the one or more processor(s) 12 and on which the programs $P_{NVG}$ and $P_{TNVG}$ are recorded.

The functional architecture, the operation and the training of a novel view generation system NVGS according to the present disclosure are now going to be presented.

The novel view generation system NVGS is essentially implemented by two neural networks G and E. For training, an additional neural network D, called discriminator, is further used. The Generator G and the Discriminator D constitute together a Generative Adversarial Network or GAN.

The encoder E is preferably a convolutional neural network. It is trained to receive a real image $I_{real}$ as an input (Fig.1C) and on this basis, to encode the real image $I_{real}$ into a latent feature z, and at the same time to predict the pose (or viewing direction) d of the real image $I_{real}$.

The latent feature z can be seen as a 'content', which describes the specific features of the input image $I_{real}$ regardless of the viewing direction, the generator being specifically trained to calculate novel views, based on these specific features and on a selected viewing direction (or pose). The latent feature z is a high dimensional vector. It may have for instance 256 components. The number of components of z depends on the use case, the dataset, and is usually defined by trial and error.

Various architectures can be used for the encoder. For instance, for predicting the latent value z, the encoder may have the same architecture as the discriminator proposed by [PIGAN]. This is the case in the embodiment presented herein.

The most downstream layer of the part of the encoder configured to predict the latent value z may be configured to output values in a range which corresponds to the support of a probability distribution chosen for latent feature z. For instance, in the present embodiment, the probability distribution for latent feature z is a uniform distribution over [-1, 1]; consequently, that part of the encoder E is configured to apply the tanh function to the data, and its output values are in the range [-1;1].

In addition, the encoder E is adapted to further predict the pose value d of the initial image. In this purpose, the downstream layer(s) of the encoder may be adapted to constitute a pose prediction head capable of predicting the pose.

The pose prediction head may for instance be implemented with a single or several linear layers, configured to input the values outputted by the penultimate layer of the encoder (more precisely, of the part of the encoder predicting the latent value) and on this basis to calculate the (usually two) values describing the pose.

Advantageously, as will be described later, because the encoder E is trained to disentangle the latent feature z from an input image $I_{real}$ with the pose d of the input image $I_{real}$, the latent feature z can be further inputted to generator G to obtain novel views NI as seen from novel viewing directions or poses $d_{NI}$.

The discriminator D is also preferably a convolutional neural network. Various architectures can be used for the discriminator. For instance, the discriminator proposed by [PIGAN] may be used.

The discriminator is a neural network configured to input an input image, and to output a realism score representative of the probability for the input image to be a real view (for instance, an image acquired from a camera) rather than a generated view (in particular, a generated view calculated by the generator).

In addition, in some embodiments, and in particular in the present embodiment, the discriminator is configured to additionally output the pose (for instance, the viewing direction) d predicted for the input image.

The realism score can be the output of the discriminator, or the logit of the discriminator (noted I). This latter value, the logit value I, is the value outputted by the penultimate layer of the discriminator. The last layer of the discriminator normally applies a normalization function (e.g. a link function) to the logit value I, to obtain a probability value. This probability value is usually a real number in the range [0;1].

The normalization function can be for instance the logistic (or sigmoid) function, so as to obtain a probability value in the [0;1] range.

The choice of using or not a normalized value for the discriminator may depend on the choice of the loss function for training the discriminator. Suitable functions for training the GAN (that is, the generator G and the discriminator D) can be found in [GAN] or [GANmethods].

The pose d is the pose of the input image, as predicted by the discriminator. It may be represented by two angles, that is, the pitch and yaw angles ($\Theta, \Phi$) (It is then assumed that the viewpoint passes through the origin point (0,0,0)).

The function of the generator G is to some extent inverse to the function of the encoder. Indeed, generator G receives a latent feature z as an input; on this basis, and in combination with a desired novel pose $d_{NI}$, the generator G calculates a novel view $I_{gen}$ (Fig.1C).

To realize this function, generator G comprises, from upstream to downstream along the 'data flow', three main functional sub-units: a ray sampler RS, a neural radiance field module NeRF, and a renderer REN (Fig.1D).

Such architecture is disclosed for instance by [GRAF].

Advantageously, a generator as proposed by the present disclosure is not object-specific: Such generator is trained on images of a whole class of objects, and consequently can generate novel views for any object belonging to the class of objects on which the generator has been trained.

Various architectures can be chosen for the generator.

For the ray sampler RS, any known ray tracing module can be used; for the renderer, any known renderer REN can be used.

For the neural radiance field module NeRF, various architectures of known neural radiance field module can be used, as long as the neural radiance field is configured to input the same inputs as NeRF (the latent feature z, the 3D-location (x,y,z), and the pose d); for instance, the architecture of the neural radiance field module disclosed by [PIGAN] may be used.

However, the neural radiance field module should preferably be based on a Siren network, which is more suited than ReLU representations for representing fine details. A Siren network is a model based on a sinusoidal representation as proposed by [SIREN]. A siren network is a multi-layer perceptron, in which for each layer, the (multi-variate) activation function is the sinusoidal function.

In addition, the neural radiance field module should preferably use a mapping network to condition layers through feature-wise linear modulation proposed by [FiLM].

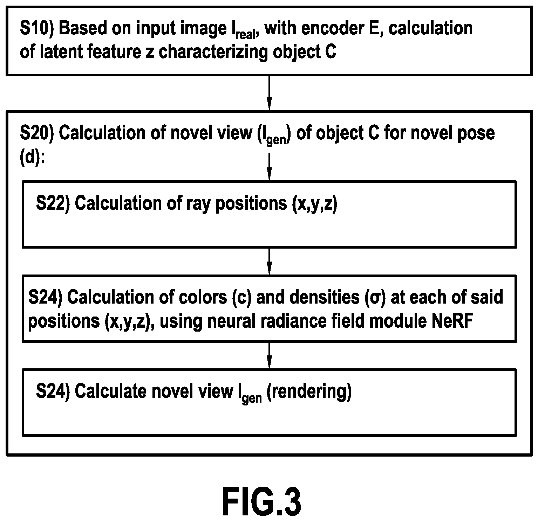

The functioning of the novel view generation system NVGS during inference is illustrated by Figs.1C, 1D and 3.

During inference, the novel view generation system NVGS may be used to generate images of objects in two modes, which correspond to two different degrees of control over the image generated by the NVGS:

- the unconditional mode, in which the latent feature is sampled directly from $p_z$, and optionally the pose d may be sampled from distribution $p_d$; and
- the conditional mode, which corresponds to using $z = E(I_{real})$, $I_{real} \sim p_{real}$, while obtaining the pose d based on the distribution $p_d$.

The unconditional mode requires obtaining the latent feature z based on the estimated distribution $p_z$ of the latent feature: $z \sim p_z$, and either sampling the pose d based on a random distribution $p_d$: $d \sim p_d$, or using a desired pose d (For instance, to illustrate this latter case, when generating novel views of faces based on a database of faces, in order to generate a view in which the person is seen from the right, the pose d can be set to correspond to a view from the right).

The output of the generator will then be an image of "an object", seen from the selected pose d. The novel view of the object is generated mainly based on the randomly calculated latent feature z.

The conditional mode is the same, except that instead of obtaining the latent feature z based on the estimated distribution $p_z$ ($z \sim p_z$), the latent feature z is obtained with the encoder: The latent feature z is the output of the encoder when a real view is inputted thereto: $z = E(I_{real})$. By doing so, any randomness in the process of image generation is removed.

Accordingly, during inference, or exploitation, of the novel view generation system NVGS, in the conditional mode, a real image $I_{real}$ is inputted to the novel view generation system.

Advantageously, a single real image $I_{real}$, in combination with a desired viewing direction d, is sufficient to calculate a novel generated view $I_{gen}$ as seen from the desired novel viewing direction d.

The novel view $I_{gen}$ is calculated in two steps (Fig.3).

First, at step S10, the real image $I_{real}$ is fed into the encoder E. On this basis, encoder E calculates the corresponding latent feature z. Encoder E also determines the pose $d_{real}$ of the initial real view $I_{real}$, but this information is not used during inference.

Then, at step S20, the latent feature z outputted by the generator is passed to generator G along with the novel pose d desired for the novel view $I_{gen}$.

On this basis, the generator G generates the novel view $I_{gen}$, which represents the same object as the initial real view $I_{real}$, but now as seen from desired viewing direction d. (On Fig.1C, several novel views $I_{gen}$ are represented, for various values of the pose d. Each of these novel views is generated for a specific value d of the pose).

As an alternative, instead of obtaining the latent code z from the encoder, it is possible to sample it from a prior distribution $p_z$ of the latent code, to make the generator G synthesize novel views, as proposed by [PIGAN].

Advantageously, novel views $I_{gen}$ can be generated for any object which belongs to the class of objects on which the novel view generation system NVGS has been trained. That is, the novel view generation system is capable of producing a novel view of decent quality, even based on an initial view representing an object not represented in the training dataset on which the NVGS was trained.

Moreover, since the generator relies on a neural radiance field to embed the representation of the class of objects, the novel view generation system NVGS advantageously is capable of generating views of transparent objects, (water, clouds,..), and to take into account specular reflections on surfaces, on objects, which is not possible with many prior techniques.

Training the novel view generation system NVGS consists in training its trainable entities, that is, its generator G and its encoder E. The discriminator D is used to train generator G and encoder E.

These entities G, D and E are trained by an iterative process. In this training process, these entities may be trained jointly or alternatively, either within each iteration or over several iterations.

Training the novel view generation system NVGS amounts to perform the following operations:

- to train the generator G and the discriminator D as a generative adversarial network; and
- to train the generator G and the encoder E to generate a reconstructed novel view NI based on an initial view $I_{real}$.

During the training process, the generator G, the encoder E and/or the discriminator D are trained by performing repeatedly several training operations. In the embodiment presented herein, five training operations S100, S200, S300, S400 and S500 are performed.

During or at the end of these training operations, the weights (or parameters) of one or more of the generator, the encoder E and the discriminator D are optimized.

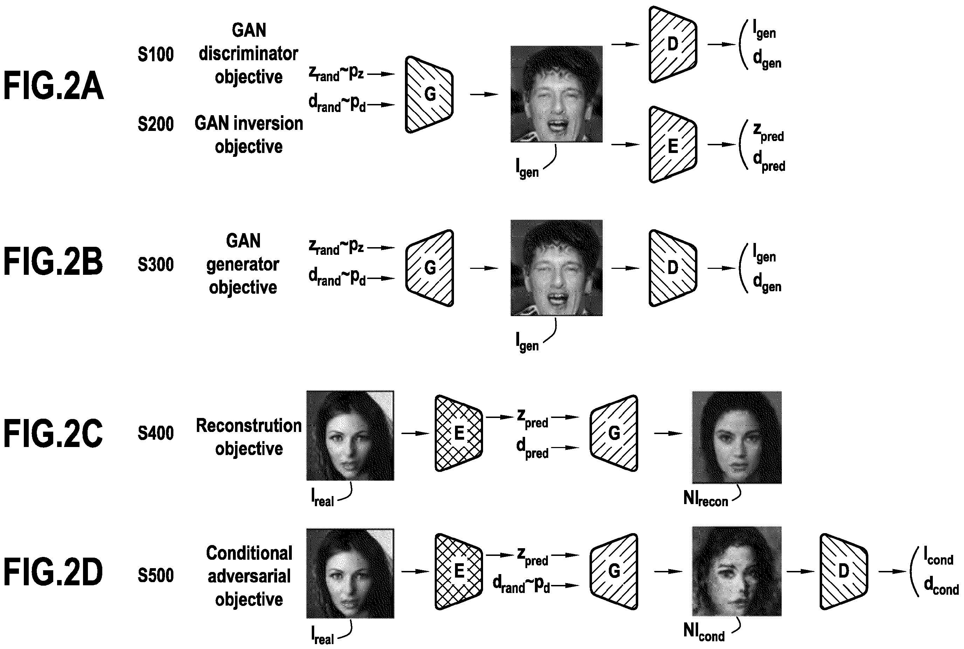

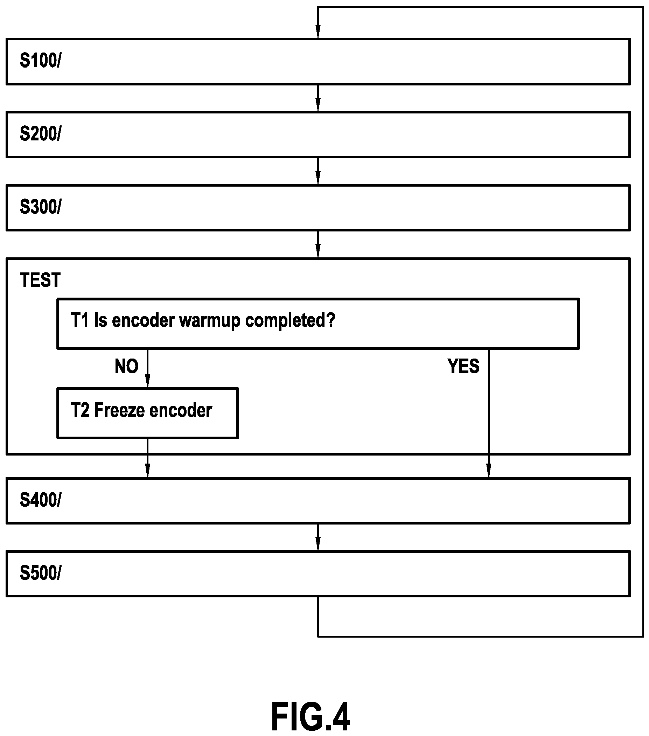

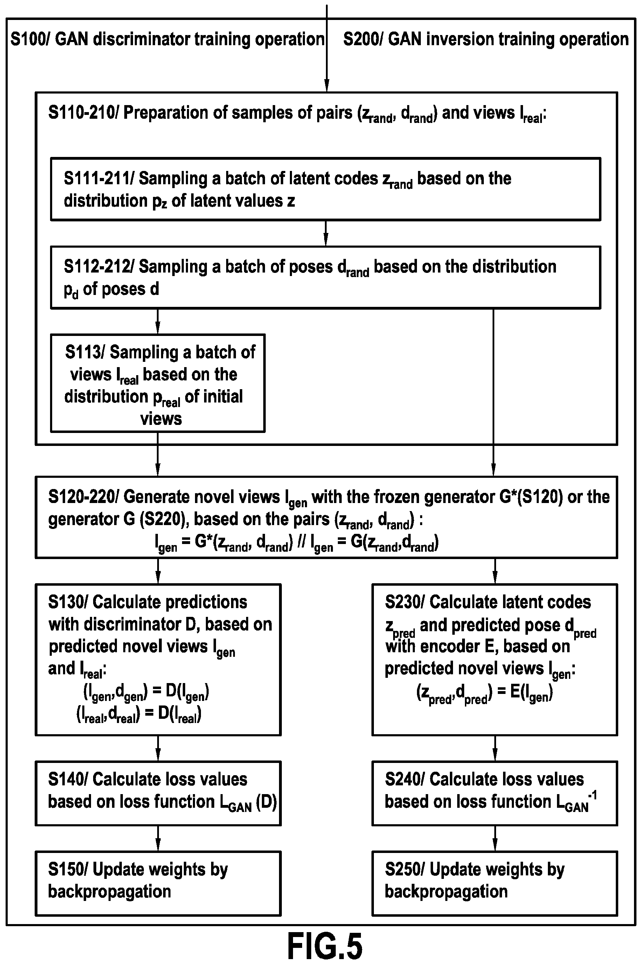

The training operations S100-S500 are illustrated by Figs.2A-2D. Fig.4 represents the global training process. Figs.5, 6 and 7 illustrate respectively training operation S100, training operations S200 and S300, training operations S400 and S500.

Each training operation generally comprises the following sub-steps: During the first sub-step (e.g. S110, S210,..), initial data are gathered or sampled. During the following two sub-steps (S120,S130; S220,S230; etc.), based on the initial data, predicted data are calculated by passing the initial data through a first entity and then through a second entity among entities E, G and D (for instance, through encoder E and then through generator G). During the fourth sub-step, loss values are calculated (S140, S240,..). During the fifth sub-step, the weights of the entities through which the data have been passed (unless of these entities is frozen) are updated by backpropagation.

Various training objectives, and therefore, various training operations can be considered to train the generator G, the encoder E and the discriminator D.

Importantly, as indicated above, during some of these training operations, one of the entities through which the data have been passed may remain "frozen" during the considered training operation: This means that the weights of the considered frozen entity are not updated on the basis of the loss values calculated during the considered training operation. For instance, the generator may remain frozen during discriminator updates, and vice-versa. When an entity is frozen, it is denoted with an asterisk in the equations (e.g., G*), and represented by ascending hatching on the figures 2A-2D.

In order to train the novel view generation system NVGS, a training dataset DS of real views $I_{real}$ is prepared beforehand.

This dataset DS comprises a number of views of objects of a class of objects, on which the NVGS is to be trained. A single view per object is sufficient. The classes of objects are sets of objects which have visual similarities; for instance chairs, bottles, dogs, faces, etc.

The images of the training dataset are preferably acquired such that the camera was always positioned at more or less the same distance of the object, and such that the camera was always pointed approximately towards the center of the object.

To perform the training operations, at each iteration of the algorithm, it is usually necessary to gather a set of data, a 'batch' of data, which will be used for the training operation.

In particular, in the embodiment presented herein, each training operation starts by constituting a batch of data. Constituting such a batch of data is carried out differently, depending on whether the data are input images $I_{real}$, latent codes z or poses d.

When the data are images, the batches of images are obtained by randomly sampling the training dataset DS.

When the data are poses, that is, when the pose d is an input datum for a considered training operation, in order to obtain a batch of poses, it is highly advisable to have prior knowledge of a distribution $p_d$ of the poses of the objects represented in the dataset. Batches of poses can then be calculated (for instance at steps S110, S210, S310, S510) based on the known distribution $p_d$ of the poses.

The distribution $p_d$ of the poses of the views $I_{real}$ contained in the training dataset DS depend on that dataset. This distribution $p_d$ is either known or determined beforehand. For instance (depending on the dataset DS and the choice of pose coordinates), this distribution $p_d$ can be a multivariate Gaussian with diagonal covariance (e.g. for images of faces), or uniform on a hemisphere (e.g. for images of cars). Based on distribution $p_d$, since it is representative of the poses of the views $I_{real}$ of the training dataset DS, batches of random poses $d_{rand}$ having a suitable distribution can be generated.

When the data are latent features, that is, when the latent feature z is an input datum for a considered training operation, in order to prepare batches of latent code z, it is necessary to have prior knowledge of the distribution $p_z$ of the latent features z. Based on this distribution $p_z$, it will then be possible to generate batches of values of the latent feature z having a suitable distribution.

The prior distribution $p_z$ of latent value z is therefore chosen beforehand. This prior distribution $p_z$ is chosen to correspond to the output range of the encoder

For instance, in the present embodiment, $p_z$ is chosen as a multivariate uniform distribution on [-1;1]. Indeed in the present embodiment, the output of the encoder is normalized by applying the tanh function to the features of the encoder.

The prior distribution $p_z$ may be chosen as a random distribution.

Using a prior distribution $p_z$ makes it easy to obtain a random sample of latent features $z_{rand}$. It should be noted on the other hand that the prior distribution $p_z$ has to be chosen carefully. Indeed, the encoder of an NVGS trained on the basis of latent feature samples generated on the basis of a distribution $p_z$ will be able to properly encode or predict an initial image $I_{real}$ into a suitable latent feature $z_{pred}$ only insofar as the latent feature z corresponding to the inputted initial image is within the support of the prior distribution $p_z$.

Accordingly, to train the NVGS, it is essentially necessary to have a set of views of the objects which are to be recognized. The other elements which may be necessary to train the NVGS, that is, the distribution of the poses, and the distribution of the latent features z, usually may be easily determined. Consequently, the method or system of the present disclosure can be easily implemented.

The training operations S100-S500 are now going to be presented in relation with Figs.5, 6 and 7.

Importantly, some steps of the training operations can be common (or shared) to two or more training operations. Moreover, the training operations can be performed either at each iteration of the training process, or at selected iterations thereof.

Training operations S100 and S200 are presented on the same figure (Fig.5), since their first steps S110-S120, S210-S220 are to a great extent common.

Training operations S200 and S300 are performed to train the generator G and the discriminator D. They are a non-limiting example of training operations for training generative adversarial networks, such as the training operations presented by [GAN] or [GANmethods].

Training operation S400 is a non-limiting example of training operation(s) to train the generator (G) and the encoder (E), based on an initial view ($I_{real}$), to generate a reconstructed novel view ($I_{recon}$) resembling the inputted real view ($I_{real}$).

The individual training operations S100-S500 will be described first, in relation with the different objectives pursued, and then the whole training procedure will be described.

S100 - GAN discriminator training operation

The training operation S100 is first carried out to train discriminator D (Figs.2A and 5).

The purpose of operation S100 is to train discriminator D to distinguish between generated views $NI_{gen}$ and real views $I_{real}$, which are camera images $I_{real}$ sampled from dataset DS.

At step S110, a batch of samples is prepared:

First, samples ($z_{rand}$, $d_{rand}$) comprising randomly sampled latent codes $z_{rand}$ and randomly sampled poses $d_{rand}$ are prepared:

- at step S111, the randomly sampled latent codes $z_{rand}$ are calculated based on the distribution $p_z$ of latent values z; and
- at step S112, the randomly sampled poses $d_{rand}$ are calculated based on the distribution $p_d$ of poses d.

In parallel (step S113), a batch of real images $I_{real}$ is constituted by sampling images from the dataset.

The distribution of poses $p_d$ used to calculate the randomly sampled poses $d_{rand}$ preferably has to correspond to the distribtion $p_{real}$ of the real views $I_{real}$ sampled from the training dataset DS.

Then, at step S120 each sample ($z_{rand}$, $d_{rand}$) is inputted to the frozen generator G* to obtain a predicted novel view $I_{gen} = G*(z_{rand}, d_{rand})$.

Then, at step S130 the calculated novel views $I_{gen}$ are inputted to discriminator D, which outputs a prediction $(l_{gen}, d_{gen}) = D(I_{gen})$.

The sampled initial views $I_{real}$ are also inputted to the discriminator D, which outputs predictions $(l_{real}, d_{real}) = D(I_{real})$.

Then, at step S140 loss values are calculated for the batch using the discriminator loss function $L_{GAN}$ (D):

$$L_{GAN}(D) = E_{Ireal \sim preal} \left[ softplus \left( -l_{real} \right) \right]$$

$$+ E_{zrand \sim pz; drand \sim pd} \left[ softplus \left( l_{gen} \right) + \lambda_{pos} \parallel d_{rand} - d_{gen} \parallel_2^2 \right]$$

where E(x) is the expectation of a variable x, $\lambda_{pos}$ is a tuned weighing factor, and softplus is the SmoothReLU activation function.

In the above equation, since in this embodiment the discriminator D is configured to output the poses ($d_{gen}$, $d_{real}$) of the inputted generated and real views $I_{gen}$ and $I_{real}$, the GAN discriminator loss function $L_{GAN}$ includes the optional term mentioned above which serves to train the discriminator to take into account mean squared error (MSE) supervision over the known pose $d_{rand}$.

Finally at step S150, the weights of the discriminator D are updated based on the calculated loss values by backpropagation.

Training operation S100 may for instance be performed as the corresponding training operation described in [PIGAN].

S200 - GAN inversion training operation

In addition (Figs.2A and 5), the encoder E is jointly optimized with the discriminator D.

The steps S210 (the two sub-steps S211 and S212) and S220 are identical to the two sub-steps S111 and S112 of step S110 and to step S120.

In other words, the samples ($z_{rand}$, $d_{rand}$) calculated at step S110 and the novel views $I_{gen}$ computed to train discriminator D at step S120 may also be used to perform training operation S200.

At step 230 the novel views $I_{gen}$ are used to predict predicted latent values $z_{pred}$ and predicted pose $d_{pred}$, using encoder E:

$$(z_{pred}, d_{pred}) = E(I_{gen})$$

The purpose of training operation S200 is to ensure consistency between the sampled content and pose ($z_{rand}$, $d_{rand}$) and those ($z_{pred}$, $d_{pred}$) extracted from the generated image by the encoder E.

In this purpose, at step S240 loss values are calculated for the batch of samples, based on the following GAN inversion loss function:

$$L_{GAN-1}(E) = E_{zrand \sim pz; drand \sim pd} \left[ \parallel z_{pred} - z_{rand} \parallel_2^2 + \parallel d_{pred} - d_{rand} \parallel_2^2 \right]$$

Finally at step S250, the weights of the encoder E are updated based on the calculated loss values by backpropagation.

S300 - GAN generator training

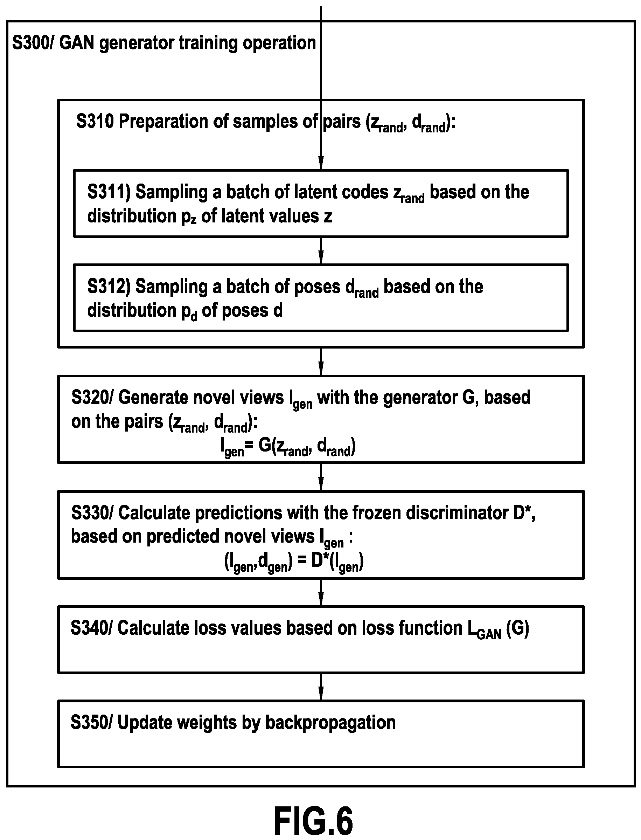

Training operation S300 is carried out to train generator G (Figs.2B and 6).

The first step S310 consists in preparing a batch of samples ($z_{rand}$, $d_{rand}$) comprising randomly sampled latent codes $z_{rand}$ and randomly sampled poses $d_{rand}$. These samples are calculated like at step S110, in two sub-steps S311 and S312 which correspond to steps S111 and S112.

Then, at step S320 a batch of novel views $I_{gen}$ are generated with the generator G, based on the pairs ($z_{rand}$, $d_{rand}$): $I_{gen}$ = G($z_{rand}$, $d_{rand}$).

Then, at step S330 the calculated novel views $I_{gen}$ are inputted to the frozen discriminator D*, which outputs a prediction ($l_{gen}$, $d_{gen}$) = D*($I_{gen}$).

Then, at step S340 loss values are calculated for the batch using the equation:

$$L_{GAN}(G) = E_{zrand \sim pz; drand \sim pd} \left[ softplus \left( -l_{gen} \right) + \lambda_{pos} \parallel d_{rand} - d_{gen} \parallel_2^2 \right]$$

where $\lambda_{pos}$ is a tuned weighing factor.

As shown in the equation above, during this training operation, the generator is incentivized to maximize the realism score $I_{gen}$.

In addition, since in this embodiment the discriminator D is configured to predict the pose, the prediction of poses $d_{gen}$ based on images generated with $d_{rand}$ is optimized by minimizing a MSE (mean squared error) between $d_{gen}$ and $d_{rand}$. That is, the generator is penalized if the image pose $d_{gen}$ recovered by the discriminator does not correspond to the sampled pose $d_{rand}$, thus setting the goal of learning a "canonical" 3D space. This is especially helpful if the pose distribution of real data is noisy.

Finally at step S350, the weights of the generator G are updated based on the calculated loss values by backpropagation.

## S400 - Reconstruction objective training operation

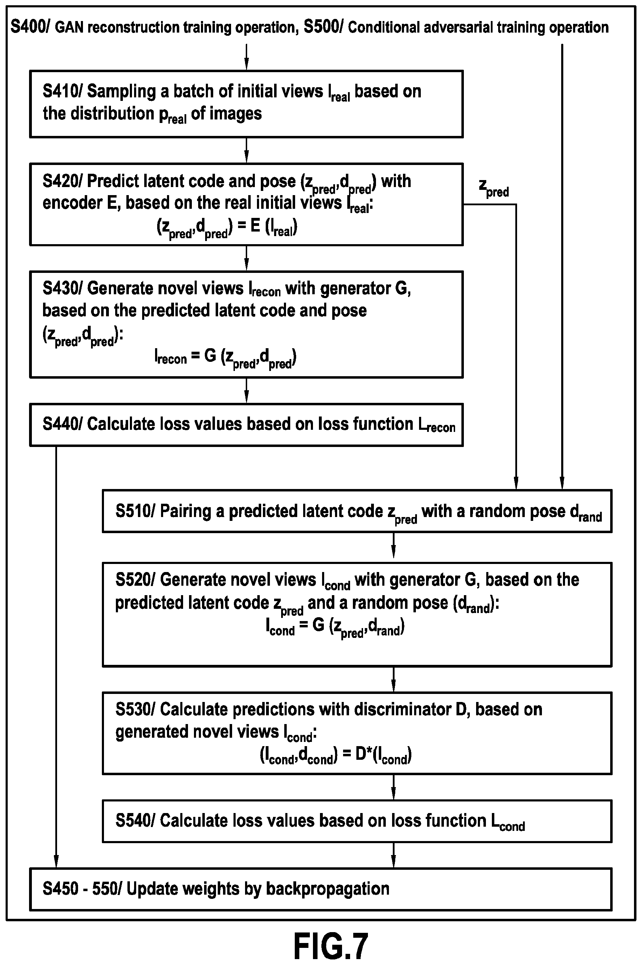

Training operation S400 is performed in order to promote consistency of the novel views $I_{gen}$ generated by generator G. In this purpose, generator G may be conditioned as follows (Figs.2C and 7).

First, at step S410, a batch of real views $I_{real}$ is sampled from the dataset DS, based on the distribution $p_{real}$ of images in the dataset.

Then, at step S420, the so-obtained batch of real initial views $I_{real}$ is passed through the encoder E. The encoder E calculates predicted latent codes $z_{pred}$ and poses $d_{pred}$. for the real initial views $I_{real}$. :

$$(z_{pred}, d_{pred}) = E\,(I_{real})$$

Then, at step S430, reconstructed views $I_{recon}$ are generated by generator G, based on the predicted latent value $z_{pred}$ and predicted pose $d_{pred}$:

$$I_{recon} = G\,(z_{pred}, d_{pred})$$

Ideally, the reconstructed image $I_{recon}$ should be identical to the original image $I_{real}$. In order to minimize differences between these two images, the loss function $L_{recon}$ preferably includes one or more of the following terms:

- a mean squared error term, measuring the per-pixel squared error between the initial view and the reconstructed view $I_{recon}$;
- a structural similarity term $L_{SSIM}$ which is representative of a structural similarity index SSIM calculated between the initial view $I_{real}$ and the reconstructed view $I_{recon}$; and
- a perceptual loss term $L_{PL}$, which is a value representative of differences between features extracted respectively from the initial view and the reconstructed view.

At step S440, loss values are calculated for the batch. These loss values may be calculated based on the following reconstruction loss function $L_{recon}$:

$$L_{recon}(G,E) = E_{I_{real} \sim p_{real}}[\,\|I_{recon} - I_{real}\|^2_2 + \lambda_{sim}L_{SSIM}(I_{recon}, I_{real})$$

$$+ \lambda_{PL}L_{PL}(I_{recon}, I_{real})$$

where $\lambda_{sim}$ and $\lambda_{PL}$ are weighting factors.

Finally at step S450, the weights of the encoder and the generator are updated by backpropagation.

## S500 - Conditional adversarial objective

Training operation S500 is performed in order to improve the performance of the generator. In this purpose, generator G may be conditioned as follows (Figs.2D and 7).

Training operation S500 uses the batch values $z_{pred}$ previously calculated at step S420, and randomly sampled poses $d_{rand}$ calculated based on prior pose distribution $p_d$.

At step S510, a batch of samples is constituted by pairing a predicted value $z_{pred}$ with a random value $d_{rand}$ of the pose, to obtain a batch of paired values $(z_{pred}, d_{rand})$ of the latent feature and the pose.

At step S520, the batch of paired values $(z_{pred}, d_{rand})$ is passed through the generator. Novel views $I_{cond}$ are thus generated by generator G:

$$I_{cond} = G(z_{pred}, d_{rand})$$

Then, at step S530, these novel views $I_{cond}$ are inputted to the frozen discriminator D*, which, in this embodiment, outputs predictions ($l_{cond}, d_{cond}$):

$$(l_{cond}, d_{cond}) = D^*(I_{cond}).$$

Then, at step S540, loss values are calculated for the batch. These loss values may be calculated based on the following conditional adversarial loss function $L_{cond}$:

$$L_{cond}(G, E) = E_{I_{real} \sim p_{real}; d_{rand} \sim p_d} [\, softplus\,(-l_{cond})]$$

Finally at step S550, the weights of the generator and the encoder are updated by backpropagation.

Global training process

In preamble, it should be noted that training the encoder E to map the input images into the latent space of the GAN network (that is, the generator altogether with the discriminator), while simultaneously training the GAN network, is challenging.

However, the methods according to the present disclosure make it possible to overcome this difficulty, and to train the encoder to disentangle the latent representation of the object, represented as the latent feature z, from the pose d, thereby enabling the generator based on a predicted latent feature z and novel pose d, to correctly output a novel view of the object as seen from a novel pose d.

The novel view generation system NVGS is trained iteratively.

An exemplary embodiment of the training method is shown on Fig.4.

In this embodiment, the generator, the discriminator and the encoder are trained by iteratively performing training operations S100 and S200; a test operation TEST; and then training operations S400 and S500.

The purpose of test step TEST is to determine whether the encoder E has to be frozen during training operations S400 and S500.

Indeed, it has been found that during an initial phase of the training, the reconstruction loss may easily dominate and cause the model to overfit towards initial views, while losing its ability to correctly represent the geometry of the object.

In order to avoid such problems, a warm-up strategy (denoted with cross-hatching on figures 2C and 2D) may be implemented.

When this strategy is implemented, during a first phase of the training, the encoder is not trained ('NO' at sub-step T1, Fig.4), that is, is 'frozen' (sub-step T2, Fig;4), for the training operation S400, and optionally S500.

This serves as a warm-up for the generator to roughly learn the correspondence between encoder outputs and encoded images. The encoder is then unfrozen, enabling further distillation of its learned representations.

After the warm-up stage, the encoder and generator form a pre-trained auto-encoder capable of producing 3D representations close to ground truth, bypassing the cumbersome early-stage reconstruction objective, which is extremely hard to balance with GAN objectives.

The warm-up stage may continue over a predetermined number of iterations, for instance over 50 iterations of the training operations.

In an alternative embodiment, the discriminator and GAN inversion training operations are performed at each iteration; the GAN generator training operation is performed on even iterations; reconstruction and conditional adversarial training operations are performed jointly during odd iterations with weighting factor $\lambda_{recon}$:

$$L_{odd} = L_{cond} + \lambda_{recon} L_{recon}$$

In addition, it has been found that training the GAN the same way along all iterations may not be the most efficient solution. In fact, it may be preferable to apply progressive training methods for training the GAN.

For instance, it has been observed that training the generator from the beginning with high definition images may not be the most efficient way to train the generator.

For this reason, in order to progressively train the generator, in some embodiments the generator is trained to "fool" the discriminator by serving it progressively realistic initial views or images.

Therefore, instead of merely randomly sampling the images of the training dataset, an additional pre-processing step is applied to the initial views $I_{real}$ sampled at step S110-210:

During the first iterations, these initial views are strongly blurred so as to reduce the level of detail that they include; thereafter, during the successive iterations, the images are progressively supplied to the novel view generation system NVGS with their normal level of details.

It has been found that doing so facilitates the training of the novel view generation system NVGS.

Results

The methods and systems proposed herein have been tested over various training datasets. They have been tested in particular on:

- the dataset presented by [CelebA], comprising more than 200 000 celebrity faces;
- the dataset presented by [CARLA], comprising 10 000 images of 16 car models, rendered with Carla driving simulator with random textures;
- the dataset presented by [ShapeNet-SRN], comprising thousands of images of chairs seen from various poses.

In order to evaluate its performance, the novel view generation system NVGS has been evaluated both in the conditional mode and the unconditional modes.

In addition, since some "in the wild" datasets (such as the one proposed by [CelebA]) comprise no information about the pose of the images, and/or no multi-view ground truth image(s) are available, the following generative metrics have been used for reporting: the Inception Score proposed by [IS], the Frechet Inception Distance proposed by [FID], and the Kernel Inception Distance proposed by [KID] (with scaling factor $\times$ 100).

To compare with multi-view-based novel view synthesis methods on the dataset proposed by [Shapenet-SRN], the evaluation protocols used in [PixelNeRF] and [CodeNeRF] has been followed.

Part of the results obtained, respectively in unconditional mode and conditional mode, are reported below. Some results comprise the Peak Signal to Noise Ratio PSNR and the Structural Similarity Index Measure SSIM (proposed by [SSIM]).

First, quantitative results obtained on the dataset presented by [CelebA] are reported in the table below. In that table, the first line indicates the resolution of the images used for the test.

| | $64 \times 64$ | | | $128 \times 128$ | | |
|---|---|---|---|---|---|---|
| | FID $\downarrow$ | KID $\downarrow$ | IS $\uparrow$ | FID $\downarrow$ | KID $\downarrow$ | IS $\uparrow$ |
| [HoloGAN] | - | 2.87 | - | 39.7 | 2.91 | 1.89 |
| [GRAF] | - | - | - | 41.1 | 2.29 | 2.34 |
| [PIGAN] | 5.15 | 0.09 | 2.28 | 14.7 | 0.39 | 2.62 |
| NVGS (unconditional mode) | 7.68 | 0.16 | 2.27 | 16.17 | 0.91 | 2.43 |
| NVGS (conditional mode) | 24.82 | 1.93 | 2.21 | 31.01 | 2.36 | 2.16 |

Second, quantitative results obtained on the dataset presented by [CARLA] are reported in the table below. In that table like in the first one, the first line indicates the resolution of the images used for the test.

| | $64 \times 64$ | | | $128 \times 128$ | | |
|---|---|---|---|---|---|---|
| | FID $\downarrow$ | KID $\downarrow$ | IS $\uparrow$ | FID $\downarrow$ | KID $\downarrow$ | IS $\uparrow$ |
| [HoloGAN] | 134 | 9.70 | - | 67.5 | 3.95 | 3.52 |
| [GRAF] | 30 | 0.91 | - | 41.7 | 2.43 | 3.70 |
| [PIGAN] | 13.59 | 0.34 | 3.85 | 29.2 | 1.36 | 4.27 |
| NVGS (unconditional mode) | 11.40 | 0.43 | 3.86 | 27.88 | 1.43 | 4.38 |
| NVGS (conditional mode) | 13.70 | 0.44 | 3.78 | 38.51 | 2.37 | 3.89 |

Advantageously, while the prior methods mentioned above ([HoloGAN], [GRAF] and [PIGAN]) only comprise unconditional mode, the method according to the present disclosure can also be implemented in the conditional mode.
Additional quantitative results obtained on the dataset presented by [ShapeNet-SRN], are further reported in the three tables below.
The first table below shows reconstruction metrics, based on views having $128 \times 128$ pixel resolutions. In that table, (*) means that multi-view training data are required. (**) means that multi-view training data and test time optimization are required.

| Method | PSNR↑ | SSIM↑ |
|---|---|---|
| [GRF](*) | 21.25 | 0.86 |
| [PixelNeRF](*) | 23.72 | 0.91 |
| [CodeNeRF] (**) | 22.39 | 0.87 |
| NVGS (conditional mode) | 18.14 | 0.84 |

The second table below shows generative metrics, with views of $64 \times 64$ pixel resolution:

| Method | FID↓ | KID↓ | IS↑ |
|---|---|---|---|
| [HoloGAN] | - | 1.54 | - |
| [PIGAN] | 15.47 | 0.55 | 4.62 |
| NVGS (unconditional mode) | 14.31 | 0.51 | 4.62 |
| NVGS (conditional mode) | 17.55 | 0.59 | 4.36 |

The third table below shows comparative results, respectively in unconditional and conditional mode. In that table, the first line indicates the resolution of the images used for the test.

| | $128 \times 128$ | | | $64 \times 64$ | |
|---|---|---|---|---|---|
| | FID↓ | KID↓ | IS↑ | PSNR↑ | SSIM↑ |
| NVGS (unconditional mode) | 26.45 | 1.18 | 4.39 | - | - |
| NVGS (conditional mode) | 26.81 | 1.23 | 4.27 | 18.75 | 0.82 |

Based on the above test and on the various tests performed on the datasets mentioned before, the methods and systems proposed herein have the capacity to produce realistic novel views, based on a single initial image as an input, as can be seen for instance on Fig.1C.
More specifically, the proposed novel view generation systems generate views of a quality globally similar to the views generated by the other novel view generation models mentioned above, and this, although the novel view generation systems according to the present disclosure are generative, trained by unsupervised training, and, in contrast to all other methods, do not require test time optimization. Additionally, the proposed methods and systems can be used to generate novel views both in conditional and unconditional mode. In addition, they can further be employed for content manipulation via latent code editing, as proposed for instance in [pix2style2pix].
Those skilled in the art will recognize that the present invention may be manifested in a variety of forms other than the specific embodiments described and contemplated herein. Accordingly, departure in form and detail may be made without departing from the scope of the present invention as described in the appended claims.

**Claims**

1. A computer-implemented novel view generation method for generating a novel view ($I_{gen}$) of an object (C) as seen from a novel pose (d), based on an initial view ($I_{real}$) of the object,
   the method comprising:

S20) calculating a latent feature (z) characterizing the object (C), based on the initial view ($I_{real}$); and
S40) calculating the novel view ($I_{gen}$) of the object using a neural radiance field (NeRF), based on the novel pose (d) and the latent feature (z), the novel view ($I_{gen}$) representing the object (C) as seen from the novel pose (d).

2. The computer-implemented novel view generation method of claim 1, wherein step S20 is performed with an encoder (E) which is a neural network, step S40 is performed with a generator (G) comprising the neural radiance field (NeRF), the encoder and the generator (G) being trained so that the novel view (NV) calculated at step S40 represents the object (C) as seen from the novel pose (d).

3. The computer-implemented novel view generation method according to claim 2, wherein the encoder and the generator (G) are trained with the method according to any one of claims 4 to 12.

4. A computer-implemented training method for training an encoder (E) to calculate a latent feature (z) based on an initial view ($I_{real}$) of an object (C), and for training a generator (G) to output a novel view ($I_{gen}$) of the object (C) as seen from a novel pose (d), based on the latent feature (z) output by the encoder (E) and the novel pose (d), wherein, the training method comprises iteratively performing the following training operations:

S100,S300) training a discriminator (D) and the generator (G) and as a generative adversarial network, the discriminator being a neural network and being trained to calculate a realism score representative of a probability of a view inputted by the discriminator to be a real view rather than a generated view; and
S400) training the generator (G) and the encoder (E), based on an initial view ($I_{gen}$), to generate a reconstructed novel view ($I_{recon}$) resembling the inputted initial view ($I_{real}$).

5. A computer-implemented training method according to claim 4, wherein

the encoder (E) is configured to calculate a pose (d) of the initial view inputted to the encoder; and
at step S400, the encoder (E) and the generator (G) are jointly trained so that, when the initial view is inputted to the encoder (E), the encoder calculates the latent feature (z) and the pose (d) of the initial view; and when the calculated latent feature (z) and the pose (d) of the initial view are inputted to the generator (G), the generator calculates the novel view.

6. A computer-implemented training method according to claim 4 or 5, wherein during training operation S400, the generator (G) and the encoder (E) are trained using a reconstruction loss function ($L_{recon}$) which includes one or more of the following terms:

- a mean squared error term, which is a value representative of per-pixel squared differences between the initial view ($I_{real}$) and the reconstructed view ($I_{recon}$);
- a structural similarity term ($L_{SSIM}$) which is a value representative of a structural similarity index (SSIM) calculated between the initial view ($I_{real}$) and the reconstructed view ($I_{recon}$); and
- a perceptual loss term ($L_{PL}$), which is a value representative of differences between features extracted respectively from the initial view ($I_{real}$) and the reconstructed view ($I_{recon}$).

7. A computer-implemented training method according to any one of claims 4 to 6, wherein the training method comprises iteratively performing a training operation S200 comprising:

S210) inputting a batch of samples ($z_{rand}$, $d_{rand}$) of the latent feature and the pose;
S220) passing said batch of samples ($z_{rand}$, $d_{rand}$) of the latent feature and the pose through the frozen generator ($G*$) to obtain a batch of generated novel views ($NI_{gen}$);
S230) passing said batch of generated novel views ($I_{gen}$) through the encoder (E) to generate a batch of predicted latent features ($z_{pred}$) and poses ($d_{pred}$);
S240) calculating values of a GAN inversion loss function ($L_{GAN}^{-1}$) for each sample, wherein the GAN inversion loss function ($L_{GAN}^{-1}$) is configured to minimize differences, for each sample of the batch, between the pose ($d_{rand}$) of the sample and the predicted pose ($d_{pred}$) obtained for the corresponding generated novel view, and between a latent value ($z_{rand}$) of the sample and a corresponding predicted latent value ($z_{pred}$) obtained for the corresponding generated novel view.
S250) optimizing values of weights of the encoder (E), based on the calculated values of the GAN inversion loss function ($L_{GAN}^{-1}$).

8.  A computer-implemented training method according to any one of claims 4 to 7, wherein the training method comprises iteratively performing a conditional adversarial training operation S500 comprising:

> S420) passing a batch of real views ($I_{real}$) of objects (C) through the encoder (E) to obtain a batch of predicted values ($z_{pred}$) for the latent feature;
> S510) pairing each predicted value ($z_{pred}$) of the batch of predicted values of the latent feature with a random value ($d_{rand}$) of the pose to obtain a batch of paired values ($z_{pred}, d_{rand}$) of the latent feature and the pose;
> S520) passing said batch of paired values ($z_{pred}, d_{rand}$) of the latent feature and the pose through the generator (G) to obtain a batch of generated novel views ($I_{cond}$);
> S530) passing said batch of generated novel views ($NI_{cond}$) through the discriminator (D) to obtain a batch of predicted realism scores ($I_{pred}$);
> S540) calculating values of a conditional adversarial loss function ($L_{cond}$) for each generated novel view ($I_{gen}$) of the batch, wherein the conditional adversarial loss function ($L_{cond}$) is configured to maximize the realism scores attributed to the generated novel views;
> S550) optimizing values of weights of the generator (G) and the encoder (E), based on the calculated values of the conditional adversarial loss function ($L_{cond}$).

9.  A computer-implemented training method according to any one of claims 4 to 8, wherein when training is started, during a first number of iterations, the encoder (E) is frozen during training operation S400, or during training operations S400 and S500.

10. A computer-implemented training method according to any one of claims 4 to 9, wherein the training operations S100,S300 comprise iteratively performing a training operation S100 comprising:

> S110) inputting a batch of samples ($z_{rand}, d_{rand}$) of the latent feature and the pose, and a batch of initial views ($I_{real}$);
> S120) passing said batch of samples ($z_{rand}, d_{rand}$) of the latent feature and the pose through the frozen generator (G*) to obtain a batch of generated novel views ($I_{gen}$);
> S130) passing said batch of generated novel views ($I_{gen}$) through the discriminator (D) to obtain a batch of predicted realism scores ($I_{gen}$); and passing said batch of initial views ($I_{real}$) through the discriminator (D) to obtain a batch of predicted realism scores ($I_{real}$);
> S140) calculating values of a GAN discriminator loss function ($L_{GAN}$) for each sample of the batch, wherein the GAN discriminator loss function ($L_{GAN}$) is configured, for the samples of the batch, to maximize the realism scores calculated by the discriminator for the real views, and to minimize the realism scores calculated by the discriminator for the generated novel views; and
> S150) optimizing values of weights of the discriminator (D), based on the calculated values of the GAN discriminator loss function ($L_{GAN}$).

11. A computer-implemented training method according to any one of claims 4 to 10, wherein the discriminator (D) is configured to additionally output a pose (d) of an initial view ($I_{real}$) inputted to the discriminator.

12. A computer-implemented training method according to claims 10 and 11, wherein

> at step S130), when said batch of generated novel views ($I_{gen}$) is passed through the discriminator (D), the discriminator (D) additionally outputs a batch of predicted poses ($d_{gen}$); and when said batch of initial views ($I_{real}$) is passed through the discriminator (D), the discriminator additionally outputs a batch of and predicted poses ($d_{real}$); and
> the GAN discriminator loss function ($L_{GAN}$) used during the training operation S100 is configured, for the samples of the batch, to additionally minimize differences between the poses ($d_{rand}$) of the samples and the predicted poses ($d_{pred}$) obtained for the corresponding generated novel views.

13. A computer-implemented training method according to any one of claims 4 to 12, wherein the training operations S100,S300 comprise iteratively performing a training operation S300 comprising:

> S310) inputting a batch of samples ($z_{rand}, d_{rand}$) of the latent feature and the pose;
> S320) passing said batch of samples of the latent feature and the pose through generator (G) to obtain a batch of generated novel views ($I_{gen}$);
> S330) passing said batch of generated novel views ($I_{gen}$) through the frozen discriminator (D*) to obtain a batch of predicted realism scores ($I_{gen}$) for the generated novel views ($I_{gen}$);

S340) calculating values of a GAN generator loss function ($L_{GAN}$) for each sample of the batch, the GAN generator loss function ($L_{GAN}$) being configured, for the samples of the batch, to maximize the realism score ($I_{gen}$) calculated by the discriminator for the generated novel views; and

S350) optimizing values of weights of the generator (G), based on the calculated values of the GAN generator loss function

14. A computer-implemented training method according to claim 11 and 13, wherein

at step S330, when said batch of generated novel views ($I_{gen}$) is passed through the frozen discriminator (D*), the frozen discriminator (D*) additionally outputs a batch of predicted poses ($d_{gen}$) for the generated novel views ($I_{gen}$); and

the GAN generator loss function ($L_{GAN}$) used during the training operation S300 is configured, for the samples of the batch, to additionally minimize differences between the poses ($d_{rand}$) of the samples and the predicted poses ($d_{gen}$) obtained for the corresponding generated novel views ($I_{gen}$).

15. The computer-implemented training method according to any one of claims 4 to 14, wherein training data inputted to the encoder or the generator (G) to train the encoder and the generator only include views of objects, for instance only include views of objects of a specific class of objects, and/or only include a single view per object.

16. One or more computer program(s) ($P_{NVG}$, $P_{TNVG}$) comprising instructions which, when the instructions are executed by one or more processor(s) (12), cause the computer to carry out the steps of a novel view generation method according to any one of claims 1 to 3, or the steps of a training method according to any one of claims 4 to 15.

17. A non-transitory computer readable medium (11), having the one or more computer program(s) according to claim 16 stored thereon.

18. A system (NVGS) comprising one or more processor(s) (12) and a non-transitory computer readable medium (11) according to claim 17.

**FIG.1A**

C

20

| Storage | Processor(s) |
|---------|-------------|
| 11 | 12 |

10

NVGS

# FIG.1B

FIG.1C

**FIG.1D**

EP 4 235 588 A1

**FIG.2A**

S100 — GAN discriminator objective

S200 — GAN inversion objective

**FIG.2B**

S300 — GAN generator objective

**FIG.2C**

S400 — Reconstrution objective

**FIG.2D**

S500 — Conditional adversarial objective

S10) Based on input image $I_{real}$, with encoder E, calculation of latent feature z characterizing object C

S20) Calculation of novel view ($I_{gen}$) of object C for novel pose (d):

S22) Calculation of ray positions (x,y,z)

S24) Calculation of colors (c) and densities (σ) at each of said positions (x,y,z), using neural radiance field module NeRF

S24) Calculate novel view $I_{gen}$ (rendering)

# FIG.3

S100/

S200/

S300/

TEST

T1 Is encoder warmup completed?

NO

YES

T2 Freeze encoder

S400/

S500/

# FIG.4

| S100/ GAN discriminator training operation | S200/ GAN inversion training operation |
|---|---|

S110-210/ Preparation of samples of pairs ($z_{rand}$, $d_{rand}$) and views $I_{real}$:

S111-211/ Sampling a batch of latent codes $z_{rand}$ based on the distribution $p_z$ of latent values z

S112-212/ Sampling a batch of poses $d_{rand}$ based on the distribution $p_d$ of poses d

S113/ Sampling a batch of views $I_{real}$ based on the distribution $p_{real}$ of initial views

S120-220/ Generate novel views $I_{gen}$ with the frozen generator G*(S120) or the generator G (S220), based on the pairs ($z_{rand}$, $d_{rand}$) :
$$I_{gen} = G^*(z_{rand}, d_{rand}) \text{ // } I_{gen} = G(z_{rand}, d_{rand})$$

S130/ Calculate predictions with discriminator D, based on predicted novel views $I_{gen}$ and $I_{real}$:
$$(I_{gen}, d_{gen}) = D(I_{gen})$$
$$(I_{real}, d_{real}) = D(I_{real})$$

S230/ Calculate latent codes $z_{pred}$ and predicted pose $d_{pred}$ with encoder E, based on predicted novel views $I_{gen}$:
$$(z_{pred}, d_{pred}) = E(I_{gen})$$

S140/ Calculate loss values based on loss function $L_{GAN}$ (D)

S240/ Calculate loss values based on loss function $L_{GAN}^{-1}$

S150/ Update weights by backpropagation

S250/ Update weights by backpropagation

## FIG.5

**S300/ GAN generator training operation**

**S310 Preparation of samples of pairs ($z_{rand}$, $d_{rand}$):**

**S311) Sampling a batch of latent codes $z_{rand}$ based on the distribution $p_z$ of latent values z**

**S312) Sampling a batch of poses $d_{rand}$ based on the distribution $p_d$ of poses d**

**S320/ Generate novel views $I_{gen}$ with the generator G, based on the pairs ($z_{rand}$, $d_{rand}$):**
$$I_{gen} = G(z_{rand}, d_{rand})$$

**S330/ Calculate predictions with the frozen discriminator D\*, based on predicted novel views $I_{gen}$ :**
$$(I_{gen}, d_{gen}) = D^*(I_{gen})$$

**S340/ Calculate loss values based on loss function $L_{GAN}$ (G)**

**S350/ Update weights by backpropagation**

**FIG.6**

**S400/ GAN reconstruction training operation, S500/ Conditional adversarial training operation**

**S410/** Sampling a batch of initial views $I_{real}$ based on the distribution $p_{real}$ of images

**S420/** Predict latent code and pose $(z_{pred}, d_{pred})$ with encoder E, based on the real initial views $I_{real}$:
$$(z_{pred}, d_{pred}) = E\ (I_{real})$$

$z_{pred}$

**S430/** Generate novel views $I_{recon}$ with generator G, based on the predicted latent code and pose $(z_{pred}, d_{pred})$:
$$I_{recon} = G\ (z_{pred}, d_{pred})$$

**S440/** Calculate loss values based on loss function $L_{recon}$

**S510/** Pairing a predicted latent code $z_{pred}$ with a random pose $d_{rand}$

**S520/** Generate novel views $I_{cond}$ with generator G, based on the predicted latent code $z_{pred}$ and a random pose $(d_{rand})$:
$$I_{cond} = G\ (z_{pred}, d_{rand})$$

**S530/** Calculate predictions with discriminator D, based on generated novel views $I_{cond}$:
$$(I_{cond}, d_{cond}) = D^*(I_{cond})$$

**S540/** Calculate loss values based on loss function $L_{cond}$

**S450 - 550/ Update weights by backpropagation**

## FIG.7

Europäisches Patentamt

European Patent Office

Office européen des brevets

## EUROPEAN SEARCH REPORT

Application Number

EP 22 15 8531

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KONSTANTINOS REMATAS ET AL: "ShaRF: Shape-conditioned Radiance Fields from a Single View", ARXIV.ORG, CORNELL UNIVERSITY LIBRARY, 201 OLIN LIBRARY CORNELL UNIVERSITY ITHACA, NY 14853, 23 June 2021 (2021-06-23), XP081979258, * Abstract, section 4, in particular 4.1, 4.2, 4.3; figure 2 * | 1-18 | INV. G06T15/08 G06T15/20 |
| X | CHAN ERIC R ET AL: "pi-GAN: Periodic Implicit Generative Adversarial Networks for 3D-Aware Image Synthesis", 2021 IEEE/CVF CONFERENCE ON COMPUTER VISION AND PATTERN RECOGNITION (CVPR), IEEE, 20 June 2021 (2021-06-20), pages 5795-5805, XP034006813, DOI: 10.1109/CVPR46437.2021.00574 [retrieved on 2021-10-15] * abstract; figure 2 * * Section 3 and subsections, section 4.2 * | 1,2, 16-18 | |
| X | DANIEL REBAIN ET AL: "LOLNeRF: Learn from One Look", ARXIV.ORG, CORNELL UNIVERSITY LIBRARY, 201 OLIN LIBRARY CORNELL UNIVERSITY ITHACA, NY 14853, 19 November 2021 (2021-11-19), XP091101521, * abstract; figures 1,5 * | 1,2, 16-18 | TECHNICAL FIELDS SEARCHED (IPC) G06T |

-/--

The present search report has been drawn up for all claims

| Place of search | Date of completion of the search | Examiner |
|---|---|---|
| Berlin | 14 October 2022 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 22 15 8531

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GIANNIS DARAS ET AL: "Solving Inverse Problems with NerfGANs", ARXIV.ORG, CORNELL UNIVERSITY LIBRARY, 201 OLIN LIBRARY CORNELL UNIVERSITY ITHACA, NY 14853, 16 December 2021 (2021-12-16), XP091117575, * the whole document * | 1,2, 16-18 | |

-----

TECHNICAL FIELDS
SEARCHED       (IPC)

The present search report has been drawn up for all claims

| Place of search | Date of completion of the search | Examiner |
|---|---|---|
| Berlin | 14 October 2022 | Almeida Garcia, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

**Non-patent literature cited in the description**

- **BEN MILDENHALL ; PRATUL P. SRINIVASAN ; MATTHEW TANCIK ; JONATHAN T. BARRON ; RAVI RAMAMOORTHI ; REN NG.** Nerf: Representing scenes as neural radiance fields for view synthesis. *ECCV,* 2020
- **ERIC CHAN ; MARCO MONTEIRO ; PETR KELLNHOFER ; JIAJUN WU ; GORDON WETZSTEIN.** Pi-gan: Periodic implicit generative adversarial networks for 3d-aware image synthesis. *arXiv,* 2020
- **ZHOU WANG ; A.C. BOVIK ; H.R. SHEIKH ; E.P. SIMONCELLI.** Image quality assessment: from error visibility to structural similarity. *IEEE Transactions on Image Processing,* 2004, vol. 13 (4), 600-612
- **VINCENT SITZMANN ; JULIEN N.P. MARTEL ; ALEXANDER W. BERGMAN ; DAVID B. LINDELL ; GORDON WETZSTEIN.** Implicit neural representations with periodic activation functions. *Proc. NeurIPS,* 2020
- **IAN GOODFELLOW ; JEAN POUGET-ABADIE ; MEHDI MIRZA ; BING XU ; DAVID WARDE-FARLEY ; SHERJIL OZAIR ; AARON COURVILLE ; Y.BENGIO.** Generative adversarial networks. *Advances in Neural Information Processing Systems,* June 2014, vol. 3
- **SHANGZHE WU ; CHRISTIAN RUPPRECHT ; ANDREA VEDALDI.** Unsupervised learning of probably symmetric deformable 3d objects from images in the wild. *CVPR,* 2020
- **ETHAN PEREZ ; FLORIAN STRUB ; HARM DE VRIES ; VINCENT DUMOULIN ; AARON C. COURVILLE.** Film: Visual reasoning with a general conditioning layer. *CoRR,* 2017
- **DONG, H. W. ; YANG, Y. H.** Towards a deeper understanding of adversarial losses. *arXiv:1901.08753,* 2019
- **ZIWEI LIU ; PING LUO ; XIAOGANG WANG ; XIAOOU TANG.** Deep learning face attributes in the wild. *Proceedings of International Conference on Computer Vision (ICCV),* December 2015
- **ALEXEY DOSOVITSKIY ; GERMAN ROS ; FELIPE CODEVILLA ; ANTONIO LOPEZ ; VLADLEN KOLTUN.** CARLA: An open urban driving simulator. *Proceedings of the 1st Annual Conference on Robot Learning,* 2017, 1-16

- **TIM SALIMANS ; IAN J. GOODFELLOW ; WOJCIECH ZAREMBA ; VICKI CHEUNG ; ALEC RADFORD ; XI CHEN.** Improved techniques for training gans. *CoRR,* 2016
- **MARTIN HEUSEL ; HUBERT RAMSAUER ; THOMAS UNTERTHINER ; BERNHARD NESSLER ; G¨UNTER KLAMBAUER ; SEPP HOCHREITER.** GANs trained by a two time-scale update rule converge to a nash equilibrium. *CoRR,* 2017
- **MIKOFAJ BI'NKOWSKI ; DANICA J. SUTHERLAND ; MICHAEL ARBEL ; ARTHUR GRETTON.** *Demystifying mmd GANs,* 2021
- **ALEX YU ; VICKIE YE ; MATTHEW TANCIK ; ANGJOO KANAZAWA.** pixelNeRF: Neural radiance fields from one or few images. *CVPR,* 2021
- **WONBONG JANG ; LOURDES AGAPITO.** *Codenerf: Disentangled neural radiance fields for object categories,* 2021
- **ANGEL X. CHANG ; THOMAS A. FUNKHOUSER ; LEONIDAS J. GUIBAS ; PAT HANRAHAN ; QI-XING HUANG ; ZIMO LI ; SILVIO SAVARESE ; MANOLIS SAVVA ; SHURAN SONG ; HAO SU.** Shapenet: An information-rich 3d model repository. *CoRR,* 2015
- **ALEX TREVITHICK ; BO YANG.** Grf: Learning a general radiance field for 3d scene representation and rendering. *arXiv:2010.04595,* 2020
- **THU NGUYEN-PHUOC ; CHUAN LI ; LUCAS THEIS ; CHRISTIAN RICHARDT ; YONG-LIANG YANG.** Hologan: Unsupervised learning of 3d representations from natural images. *The IEEE International Conference on Computer Vision (ICCV),* November 2019
- **KATJA SCHWARZ ; YIYI LIAO ; MICHAEL NIEMEYER ; ANDREAS GEIGER.** Graf: Generative radiance fields for 3d-aware image synthesis. *Advances in Neural Information Processing Systems (NeurIPS),* 2020
- **RICHARDSON, E. ; ALALUF, Y. ; PATASHNIK, O. ; NITZAN, Y. ; AZAR, Y. ; SHAPIRO, S. ; COHEN-OR, D.** Encoding in style: a stylegan encoder for image-to-image translation. *Proceedings of the IEEE/CVF Conference on Computer Vision and Pattern Recognition,* 2021, 2287-2296